# FASCICULE DE BREVET EUROPEEN

(11) **EP 3 870 955 B1**
(45) Date de publication et mention de la délivrance du brevet: **17.01.2024**
(21) Numéro de dépôt: 19802083.6
(22) Date de dépôt: 22.10.2019
(51) Int. Cl.: G01J 3/02, G01J 3/14, G01J 3/18, G01J 3/28, G01J 3/50, G01N 21/25, G01N 21/55, G01N 21/57

(54) **DISPOSITIF OPTIQUE POUR LA MESURE DES PROPRIÉTÉS OPTIQUES DES MATÉRIAUX**
OPTISCHE VORRICHTUNG ZUR MESSUNG DER OPTISCHEN EIGENSCHAFTEN VON MATERIALIEN
OPTICAL DEVICE FOR MEASURING THE OPTICAL PROPERTIES OF MATERIALS

(30) Priorité: 24.10.2018 FR 1859832
(43) Date de publication de la demande: 01.09.2021
(73) Titulaire: ENTPE, 69120 Vaulx en Velin (FR)
(72) Inventeur: LABAYRADE, Raphaël, 69006 Lyon (FR); ANDREANI, Anna, 69001 LYON (FR)
(74) Mandataire: INNOV-GROUP
(86) Numéro de dépôt international: PCT/EP2019/078747
(87) Numéro de publication internationale: WO 2020/083924

(56) Documents cités:
- WO-A1-2020/083924
- DE-A1-102008 046 988
- FR-A1- 2 818 377
- FR-A1- 2 858 412
- US-A1- 2016 161 330

## Description

### DOMAINE DE L'INVENTION

La présente invention concerne le domaine de l'optique pour la mesure des propriétés optiques des matériaux, spécifiquement l'interaction lumière / matière, notamment pour les problèmes de rendu pour la génération d'images de synthèse où il est nécessaire de caractériser la réflexion ou la transmission d'une surface.

Le rendu, également appelé texturation, est un processus informatique calculant l'image 2D d'une scène créée dans un logiciel de modélisation 3D comportant à la fois des objets et des sources de lumière et vue d'un point de vue précis.

Il s'agit alors de réaliser des images de synthèse prédictives, qui sont possibles grâce à des mesures de caractéristiques optiques de matériaux selon le dispositif proposé ici, ce qui est utile notamment dans les domaines tels que l'automobile, l'architecture, la bijouterie, le mobilier, a décoration, les panneaux photovoltaïques, les verres solaires pour lunettes, la thermique bâtiment, etc.

Dans ce contexte, le spectre de la lumière incidente est essentiellement visible, où par « visible », on entend une fenêtre spectrale comprise entre 250 nm (UV) et 2500 nm (proche infrarouge) ; aussi par concision le terme « visible » sera omis dans le reste de la description.

Lorsqu'un objet est soumis à une source de lumière, celui-ci peut réfléchir la lumière, la transmettre ou l'absorber. L'interaction de la lumière avec un objet est un phénomène complexe qui est déterminé par les propriétés optiques du matériau ou des matériaux qui constituent l'objet.

Pour caractériser ces propriétés optiques, il existe des solutions utilisant des caméras, mais celles-ci fonctionnent en 3 couleurs : rouge, vert et bleu (ou RGB par anglicisme), et de fait ne permettent pas d'analyse spectrale hors de ces 3 plages de longueurs d'onde.

Or, les caractéristiques optiques d'un matériau sont décrites par les formalismes de la réflectivité bidirectionnelle, plus connue sous son acronyme BRDF pour Bidirectional Réflectance Distribution Fonction en Anglais, et de la transmittance bidirectionnelle, ou BTDF pour Bidirectional Transmittance Distribution Fonction en Anglais.

Pour la mesure de la BRDF, il est connu le document US2016161330 qui prévoit de monter une source lumineuse sur un bras en arc de cercle, le bras étant mobile en rotation et en translation, de sorte à ce que la source lumineuse peut couvrir tout point de la périphérie d'un hémisphère centré sur un point du plan de la peinture.

Toutefois, ce document ne divulgue pas de mesure spectrale au sens de la présente invention. De plus, la position relative de la source lumineuse et de la caméra est contrainte par la forme du bras en arc de cercle.

Sont également connus les documents DE102008046988, FR2818377 et FR2858412, dont aucun ne propose les 6 degrés de liberté des bras articulés selon la présente invention.

Il est proposé ici un dispositif optique de mesure permettant de caractériser optiquement un échantillon de matière, ci-après « échantillon » ou « matériau » par concision, par la mesure 5de l'une au moins parmi la BRDF et la BTDF dudit échantillon.

La BRDF et la BTDF sont des fonctions mathématiques qui dépendent des 8 paramètres suivants :
- l'angle d'illumination du matériau, caractérisé par les deux valeurs θ_in (angle zénithal) et ϕ_in (angle d'azimut), les directions de la lumière incidente en coordonnées sphériques,
- l'angle d'observation du matériau, caractérisé par les deux valeurs θ_out (angle zénithal) et ϕ_out (angle d'azimut), les directions de la lumière réfléchie en coordonnées sphériques,
- la longueur d'onde incidente λ,
- la position (x,y) d'un point dans un repère lié au matériau, et
- la polarisation p de la lumière, que l'on peut formaliser avec une matrice de Mueller.

La BRDF et la BTDF permettent de prédire l'aspect d'un objet en fonction de l'angle sous lequel il est observé et également selon l'angle sous lequel il est éclairé.

La BRDF est une fonction de distribution probabiliste qui n'est pas normalisée (ne conserve pas l'énergie), pour prendre en compte l'absorption de la lumière par le matériau.

Du fait de l'échantillonnage fin au moins des 5 paramètres (p_in, ϕ_out, θ_in, θ_out et λ parmi les 8 cités ci-dessus, la mesure des propriétés optiques des sources de lumière ou des matériaux est un processus généralement long.

Cet échantillonnage est classiquement réalisé à l'aide un spectro-goniophotomètre qui réalise une mesure point par point de la lumière réfléchie par l'échantillon dans toutes les directions de l'espace. Les temps de mesure sont de l'ordre de plusieurs jours. Leur utilisation est donc rendue difficile dans un contexte industriel.

De plus, comme l'objectif de l'art antérieur est souvent de générer des images de synthèse en couleurs, les 3 couleurs RGB suffisent. Par conséquent la source de lumière et/ou le capteur sont souvent limités à ces 3 plages de longueurs d'onde, ce qui perd toute information spectrale sur les autres longueurs d'ondes de la fenêtre visible, et ce qui rend le rendu non prédictif dans certains cas, en raison notamment du phénomène de métamérisme (même couleur RGB perçue, pour des spectres différents).

Au contraire, le dispositif optique de mesure proposé ici exploite une pluralité de capteurs répartis spatialement de manière prédéterminée, permettant la mesure simultanée de la lumière réfléchie ou transmise par l'échantillon vers une pluralité de points situés autour de celui-ci, chaque point correspondant à un capteur respectif.

En l'espèce les capteurs sont ceux d'une caméra hyperspectrale qui permet la mesure de la radiance, de la luminance et du spectre de la lumière réfléchie.

Une caméra hyperspectrale s'apparente à une caméra classique munie d'un spectrographe, à la différence qu'elle acquière une seule colonne de l'image à la fois. Un 5spectrographe est un outil composé de lentilles et d'un élément dispersif qui permet de séparer la lumière en ses différentes composantes. Chaque composante est ensuite associée à sa longueur d'onde.

L'invention repose donc sur une pluralité de capteurs permettant la mesure simultanée de la lumière émise autour du matériau à caractériser, en outre sur une grande fenêtre spectrale. 10Ce dispositif permet de réduire les temps de mesure.

### RESUME DE L'INVENTION

Plus précisément, l'invention concerne un dispositif optique pour la mesure des propriétés optiques des matériaux comprenant au moins une caractéristique parmi la lumière réfléchie (BRDF) et la lumière transmise (BTDF) par le matériau d'un échantillon (20) dans toutes les directions sphériques de l'espace autour dudit échantillon (20), pour chaque direction sphérique de la lumière incidente, le dispositif comprenant :
- une source de lumière (30), et
- un goniophotomètre configuré pour mesurer au moins l'un parmi :
   ∘ les directions de la lumière incidente en coordonnées sphériques (θ_in, ϕ_in),
   ∘ les directions de la lumière réfléchie en coordonnées sphériques (θ_out, ϕ_out).

Il est essentiellement caractérisé en ce qu'il comprend en outre :
- un dispositif de prise de vue multicapteurs, configuré pour déterminer le spectre d'émission de la lumière réfléchie ou transmise par l'échantillon vers un ensemble de points de la scène observée par le dispositif de prise de vue multicapteurs qui génère une image comprenant un ensemble de couches superposées dont chaque couche correspond respectivement à un capteur configuré pour n'être sensible qu'à une unique longueur d'onde quasi-monochromatique ; le goniophotomètre se présentant sous la forme de cellule (100) comprenant :
- un premier bras articulé (110) en trois dimensions de l'espace et configuré pour supporter la source de lumière (30); et
- un deuxième bras articulé (120) en trois dimensions de l'espace et configuré pour supporter l'échantillon (20) ou un porte-échantillon (10) ; les orientations relatives du premier bras articulé (110) et du deuxième bras articulé (120) étant pilotables ; le dispositif comprenant optionnellement en outre ledit échantillon (20).

Dans un mode de réalisation, le dispositif optique comprend en outre un écran dispersif (40), dont la position et l'orientation spatiale sont de préférence réglables.

Dans un mode de réalisation, le dispositif optique comprend en outre une mémoire comprenant au moins l'une parmi :
- une première table de correspondance comprenant une correspondance entre un point de coordonnées (X, Y) d'un élément à réflexion spéculaire disposé à la place de l'échantillon (20) pendant une étape de calibration géométrique, et sa réflexion sur l'écran dispersif (40), pour une pluralité d'incidences ; et
- une deuxième table de correspondance, comprenant des coefficients multiplicatifs calculés à l'issue d'une calibration photométrique ; et
- une troisième table de correspondance comprenant une correspondance entre un pixel de coordonnées (U, V) la caméra hyperspectrale (50), et les valeurs (θ_in, ϕ_in, θ_out, ϕ_out ; x et y) correspondantes
la cellule (100) étant optionnellement équipée en outre d'au moins l'un parmi :
- un laser à balayage, configuré pour, en cas de détection de présence, inhiber au moins l'un parmi la source de lumière (30), le premier bras articulé (110) et le deuxième bras articulé (120) ; et
- un filtre polarisant, solidaire de la source de lumière (30) ou du dispositif de prise de vue multicapteurs, et dont l'axe de polarisation est optionnellement variable.

Dans un mode de réalisation, le dispositif optique est configuré de sorte que la scène observée par le dispositif de prise de vue multicapteurs est :
- soit ledit écran dispersif (40)
- soit l'échantillon (20).

On peut prévoir que la source de lumière (30) est configurée pour émettre un faisceau lumineux incident (70) présentant une section circulaire de diamètre équivalent compris entre 0,1 mm et 20 mm, optionnellement modifiable, et qui est susceptible de générer jusqu'à 1.000.000 de lux.

On peut prévoir que la source de lumière (30) comprend :
- Soit un ensemble d'au moins 3 LEDs adjacentes dont une émet en lumière blanche, une en rouge profond et une en violet, pour émettre sur tout le spectre visible ;
- Soit plusieurs LEDs dont les faisceaux respectifs sont mélangés grâce à des lames semi réfléchissantes,
   la source de lumière (30) étant optionnellement configurée comme un système sur puce (SOC).

On peut prévoir que l'écran dispersif comprend un revêtement en fluoropolymère qui possède une haute réflexion lambertienne.

On peut prévoir que l'orientation de l'écran dispersif est variable. Par exemple l'écran est positionné sur un support orientable. De préférence la position de l'écran dispersif est fixée une fois pour toute avant une série de mesures pour laquelle l'orientation est la même pour toutes les incidences de la lumière.

On peut prévoir que le dispositif de prise de vue multicapteurs est une caméra hyperspectrale (50). De préférence ladite caméra hyperspectrale (50) comprend un dispositif de séparation des longueurs d'onde qui permet la décomposition spectrale de la lumière incidente ou réfléchie.

On peut prévoir que la caméra hyperspectrale (50) est configurée pour observer l'écran dispersif (40) ou l'échantillon (20) colonne par colonne et déterminer le spectre, la luminance et la radiance en chaque pixel de l'image hyperspectrale.

On peut prévoir que le dispositif selon l'invention comprend en outre un calculateur configuré pour calculer pour un ensemble de points (x,y) dans un repère lié à l'échantillon au moins l'un parmi :
- une carte géographique des normales à l'échantillon (20) à partir des valeurs (θ_in, ϕ_in) de la lumière incidente et des valeurs (θ_out, ϕ_out) de la lumière réfléchie, et
- une BRDF globale texturée, qui est la collection des BRDF ponctuelles, chaque pixel d'une texture de l'échantillon (20) étant caractérisé par l'une de ces BRDF ponctuelles.

La présente invention présente une résolution angulaire assez forte, c'est-à-dire supérieure à une valeur seuil, ce qui permet de déterminer comment la lumière est réfléchie autour du pic de spécularité d'un échantillon.

La présente invention permet d'accéder à des données qui, exploités par un logiciel de traitement adapté (par exemple le logiciel vendu sous la marque déposée « Océan » par la société Eclat Digital Recherche), permet d'obtenir un rendu photoréaliste, c'est-à-dire un rendu visuel tellement détaillé qu'il peut passer pour une photographie, avec des temps de mesure inférieurs aux temps de mesures connus à ce jour.

L'invention permet également des applications de type « contrôle qualité », de type contrôle de conformité de matériaux, comme par exemple des peintures, notamment des peintures automobiles pailletées, de l'aluminium brossé, du métal, de type analyse des défauts, de type caractérisation colorimétrique fine, etc.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

la figure 1 illustre la lumière incidente et la lumière réfléchie en coordonnées sphériques sur un échantillon dont la normale est l'axe Z,
- la figure 2 illustre un exemple de réalisation du dispositif,
- la figure 3 illustre un autre exemple de réalisation du dispositif,
- la figure 4 illustre un mode de réalisation d'une cellule selon l'invention,

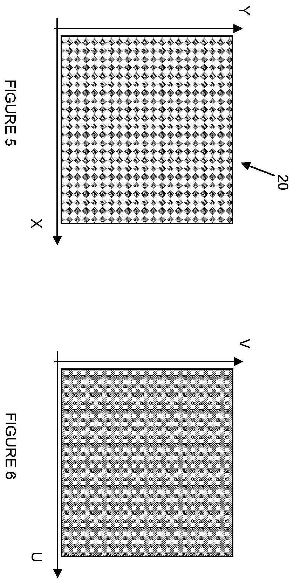

- la figure 5 illustre un ensemble de points de coordonnées x,y, sur un échantillon, et
- la figure 6 illustre un ensemble de pixels de coordonnées u,v dans l'image hyperspectrale de l'échantillon de la figure 5.

### DESCRIPTION DETAILLEE

Le dispositif de mesure proposé ici permet de mesurer au moins une caractéristique parmi la BRDF (lumière réfléchie) et la BTDF (lumière transmise) par le matériau d'un échantillon 20 dans toutes les directions sphériques de l'espace autour dudit échantillon 20, pour chaque direction sphérique de la lumière incidente.

Le dispositif optique de mesure proposé comprend :
- une source de lumière 30,
- un écran dispersif 40,
- un dispositif de prise de vue multicapteurs,
- un goniomètre (non illustré).

Le cas échéant, le dispositif optique de mesure proposé comprend également un échantillon 20.

Il existe des logiciels de simulation 3D qui, pour une géométrie arbitraire d'une scène, simulent la propagation de la lumière depuis des sources lumineuses en calculant des rayons lumineux virtuels qui viennent en intersection avec ladite géométrie, et sont alors réfléchis ou transmis.

La présente invention permet que lesdits rayons soient réfléchis selon la BRDF ou BTDF mesurée grâce au dispositif selon l'invention, c'est-à-dire selon les mesures du matériau qui ont été faites préalablement. En chaque point de la géométrie 3D, on applique les mêmes propriétés optiques si le matériau n'est pas texturé, ou non si le matériau est texturé (c'est-à-dire un matériau pour lequel la BRDF ou la BTDF est différente pour différents points x,y). De même, si le matériau présente des micro reliefs, la BRDF moyenne est modifiée localement en fonction de la normale locale qui est calculée comme décrit ultérieurement.

### Spectro-Goniophotomètre

Par goniophotomètre, on entend tout dispositif, appareil ou capteur, permettant de mesurer des angles de faisceaux lumineux.

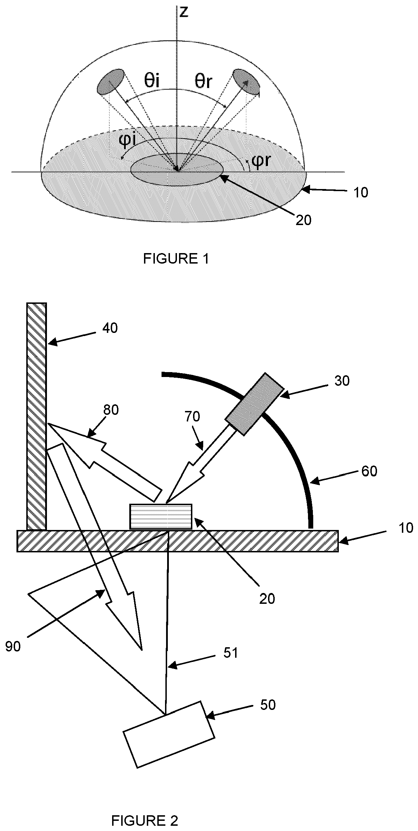

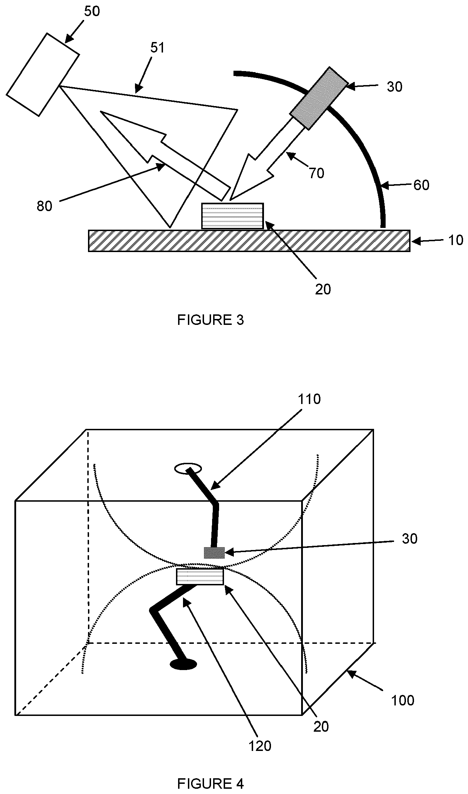

**Dans un premier exemple,** illustré aux figures 2 et 3, on peut mettre en oeuvre tout goniophotomètre connu, configuré pour déterminer (mesurer) au moins l'un parmi :
- θ_in, ϕ_in, les directions de la lumière incidente en coordonnées sphériques,
- θ_out, ϕ_out, les directions de la lumière réfléchie en coordonnées sphériques.
Avec :
- θ le zénith compris entre 0° (direction normale) et 90° (direction tangente à l'objet plan),
- ϕ l'azimut,
- l'indice _in correspondant au faisceau lumineux incident 70 qui éclaire l'échantillon 20 (ou l'écran dispersif 40 le cas échéant), et
- l'indice _out correspondant au faisceau lumineux incident 70 réfléchi ou transmis par l'échantillon 20.

Différents modèles de goniophotomètres existent sur le marché ; ils permettent de mesurer 4 des 5 paramètres, c'est à dire ϕ_in, ϕ_out, θ_in et θ_out. La valeur ϕ_in est parfois fixée avec une unique valeur, par exemple 0°.

Avantageusement, on prévoit de coupler un spectromètre au goniophotomètre, ce qui permet alors de mesurer le 5^{ème} paramètre λ. Par exemple, la lumière réfléchie est captée puis transmise par une fibre optique jusqu'à un spectrophotomètre.

Le spectro-goniophotomètre comprend au moins un porte-échantillon 10 sur lequel on 5dispose l'échantillon 20. Ledit échantillon 20 est éclairé par une source de lumière 30 décrite ci-après, selon un angle compris entre 0° et 180° par rapport à sa normale.

Par exemple la source de lumière 30 est mobile le long d'un arceau 60. **Dans un mode de réalisation selon l'invention,** illustré à la figure 4, on prévoit que le dispositif selon l'invention comprend un goniophotomètre sous forme de cellule 100 équipée de deux bras robotisés pour positionner et orienter précisément d'une part l'échantillon 20, d'autre part la source de lumière 30 par rapport à l'échantillon 20, c'est-à-dire :
- un premier bras articulé 110 à 6 degrés de liberté, et configuré pour supporter la source de lumière 30; et
- un deuxième bras articulé 120 à 6 degrés de liberté, et configuré pour supporter l'échantillon 20 ou un porte-échantillon 10,
tels que chaque bras est articulé sur une demi-sphère respective, représentées en pointillées sur le figure 4, tous les points d'une demi-sphère étant exploitables, avec une répétabilité de repositionnement à 0,018 mm près.

Chaque bras présente deux extrémités dont l'une est munie d'un dispositif de préhension. Par exemple le dispositif de préhension est une pince, en l'espèce actionnable par air comprimé. Dans un mode de réalisation, chaque bras peut porter jusqu'à 7kg.

En l'espèce le bras destiné à supporter l'échantillon 20 comprend une pince équipée de mors parallèles qui viennent saisir l'échantillon 20 ou un porte-échantillon 10.

On peut prévoir que la pince peut aussi, au moment de la calibration photométrique, venir saisir l'écran dispersif 40.

En l'espèce, on prévoit que les deux bras sont disposés à l'intérieur d'une cellule 100 parallélépipédique comprenant un sol plan et un plafond plan, la cellule 100 étant telle que l'extrémité fixe d'un bras est solidaire du plafond et que l'extrémité fixe de l'autre bras est solidaire du sol.

On peut prévoir une interface graphique qui permet de définir la position d'un point sur l'échantillon 20 par rapport au centre de la cellule 100 et l'orientation selon 3 axes, ainsi que la position et l'orientation de la source de lumière 30 en coordonnées sphériques dans un repère dont l'origine est le point défini sur l'échantillon, un axe qui est la normale à l'échantillon, les deux autres axes étant perpendiculaires et dans le plan de l'échantillon.

De préférence les bras sont de couleur noire pour éviter la réflexion de la lumière qui pourrait autrement perturber les mesures.

On peut prévoir d'équiper la cellule 100 d'un laser à balayage (non illustré), configuré pour inhiber la source de lumière 30, notamment en cas de détection de présence. En effet, la source de lumière 30 peut être très puissante et potentiellement dangereuse. Le laser à balayage peut être utile pour stopper le mouvement des robots si un opérateur s'approche de la cellule 100, pour éviter d'être blessé par les robots en cas de mouvement rapide.

### Source de lumière 30

On prévoit une source de lumière 30, éventuellement collimatée, de préférence sans fibre optique, pour émettre un faisceau lumineux incident 70. En effet, une fibre optique absorbe de l'énergie (autour de 400 nm et jusqu'à 450 nm) et a des caractéristiques d'absorption différentes suivant la forme de la fibre. Or la forme de la fibre serait différente en fonction de la position et l'orientation des robots, ce qui viendrait perturber les mesures.

Dans un mode de réalisation, la source de lumière 30 est configurée pour émettre un faisceau lumineux incident 70 présentant une section circulaire de diamètre compris entre 0,1 mm et 20 mm, et qui est susceptible de générer jusqu'à 1.000.000 de lux.

De préférence, on prévoit que la source de lumière 30 émet selon un spectre continu, c'est-à-dire qui a de l'énergie sur l'ensemble d'une fenêtre spectrale prédéterminée, en l'espèce de la fenêtre visible.

Plusieurs essais ont été réalisés, par exemple avec des lampes Xe-Me ou des lampes à arc ou à LED.

De préférence, la source de lumière 30 émet une lumière blanche et comprend un ensemble d'au moins 3 LEDs adjacentes dont une blanche, une rouge profond et une violet, ce qui permet d'émettre sur tout le spectre du visible. On peut aussi prévoir plusieurs LEDs dont les faisceaux respectifs sont mélangés grâce à des lames semi réfléchissantes. Par exemple, les faisceaux issus de deux LEDs (par exemple blanche et violette) seront mélangées grâce à une lame semi réfléchissante, ce qui permet de placer les deux LEDs a des endroits différents (par exemple sur des surfaces perpendiculaires l'une par rapport à l'autre), mais d'obtenir un faisceau comme si les deux LEDs étaient placées au même endroit. Ceci peut être réalisé en série avec plusieurs LEDs et plusieurs lames parallèles l'une par rapport à l'autre : le faisceau mélangé une première fois passe par une seconde lame semi réfléchissante, ce qui permet d'adjoindre la lumière issue d'une troisième LED, rouge par exemple. A la sortie de cette seconde lame, les trois LEDs sont virtuellement placées au même endroit. Cela permet donc d'avoir de l'énergie sur tout le spectre visible dans un faisceau étroit qui peut ensuite être divergé pour obtenir un cône de lumière « pointu », c'est-à-dire dont toute la lumière provient d'une petite surface quasi ponctuelle, ce qui fait que chaque point de l'échantillon éclairé ne reçoit de la lumière que depuis une seule direction.

Par exemple, la source de lumière 30 est un système sur puce (SOC).

Dans un mode de réalisation, la source de lumière 30 est un système sur puce qui présente des dimensions sensiblement égales à 55 mm x 55 mm. Ainsi, la source de lumière 30 ne gêne pas les 6 degrés de liberté des bras articulés.

Dans un mode de réalisation, la source de lumière 30 comprend un ensemble de N LEDs adjacentes, avec N un entier naturel. Par exemple, N est compris entre 20 et 60 et de préférence N est compris entre 30 et 40. En l'espèce il s'agit soit de LEDs blanches de spectres de préférence différents, soit de LEDs présentant un spectre centré sur une longueur d'onde et de forme sensiblement gaussienne avec une largeur à mi-hauteur comprise entre 20 nm et 40 nm , chaque LED émettant sur un spectre de longueur d'onde connu, chaque LED étant activable sélectivement. On a ainsi une source de lumière 30 hyperspectrale.

De préférence, on prévoit qu'au moins une LED est blanche et que les autres présentent un spectre centré sur une longueur d'onde respective et de forme sensiblement gaussienne avec une largeur à mi-hauteur comprise entre 20 nm et 40 nm. De préférence, on prévoit un ensemble de longueurs d'onde réparties au moins sur le spectre visible (380 nm à 780 nm).

Par exemple, on peut prévoir un ensemble de LED centrées respectivement sur les longueurs d'onde suivantes : 380 nm, 390 nm, 405 nm, 415 nm, 425 nm, 440 nm, 450 nm, 470 nm, 480 nm, 490 nm, 505 nm, 520 nm, 550 nm, 590 nm, 620 nm, 630 nm, 660 nm, 670 nm, 730 nm.

On peut aussi prévoir, alternativement ou en outre, un ensemble de LED centrées sur l'infra rouge (780 nm à 2500 nm), et notamment 850 nm à 1550 nm. Les LED centrées sur l'infra rouge permettre notamment la mesure des caractéristiques optiques des matériaux en vue de leur simulation lorsqu'ils sont éclairés par un LIDAR (laser à balayage), ce qui permet des applications de conception, évaluation et validation des systèmes d'aide à la conduite automobile et de conduite autonome de véhicules automobiles.

On peut aussi prévoir, alternativement ou en outre, un ensemble de LED centrées sur l'ultra violet (250 nm à 380 nm).

Une telle source de lumière permet d'accéder à la caractérisation de matériaux fluorescents, qui émettent des longueurs d'ondes différentes de celles reçues, et phosphorescents, qui émettent de la lumière après l'avoir reçue, pendant une certaine durée, et potentiellement aussi de longueurs d'ondes différentes de celle reçue.

L'avantage d'une telle source lumineuse à LED est que son rendement énergétique est bien supérieur à celui d'un monochromateur classique, donc que le flux produit pour une puissance électrique donnée est bien supérieur. Or, afin de pouvoir mesurer la BSDF spectrale avec un bon niveau de précision et en un temps réduit, il faut beaucoup de flux incident, ce qui est nécessaire aux capteurs hyperspectraux. La nécessité d'un flux élevé est encore plus capitale lorsqu'il s'agit de caractériser les BSDF de façon surfacique, notamment les BSDF texturées, car le flux est réparti sur la surface du matériau et non pas concentré en un point.

Une telle source lumineuse constituée de plusieurs LEDs fonctionne en symbiose dans le système doté de bras articulés à 6 degrés de liberté, puisqu'ils permettent de positionner chaque LED de façon précise en coordonnées sphériques dans un repère dont l'origine est défini sur l'échantillon, chaque LED pouvant être tour à tour positionnée précisément. Un tel positionnement est nécessaire pour la mesure des BSDF, notamment des BSDF fluorescentes et phosphorescentes, et notamment lorsque l'on cherche à caractériser ces fonctions en un ensemble de points sur l'échantillon.

Ainsi, on peut calculer un ensemble de BRDF et/ou la BTDF d'un échantillon 20 pour une position prédéterminée de la source de lumière 30 et une position prédéterminée de l'échantillon 20, chaque valeur de la BRDF et/ou la BTDF calculée correspondant à l'activation sélective d'une ou plusieurs LEDs de la source de lumière 30. Par exemple, on peut allumer des LEDs ne présentant pas de recouvrement spectral (par exemple : UV et IR ; ou UV et visible mais sans recouvrement spectral), ce qui permet de mesurer, pour une seule position de la source, la BRDF/BTDF pour les longueurs d'ondes des différentes sources utilisées, la position différente des LEDs étant prise en compte lors de la construction de la BRDF, par des méthodes d'interpolation angulaires. En effet, les angles d'incidence de la lumière en provenance des différentes LEDs sont légèrement différents, une interpolation permet donc d'estimer la BRDF pour des angles arbitraires pour l'ensemble des longueurs d'onde des sources utilisées.

Grâce à cette configuration, il est possible de caractériser des échantillons de matériaux fluorescents ou phosphorescents.

On peut prévoir que la taille (diamètre équivalent) du faisceau lumineux incident 70 est modifiable. La taille du faisceau lumineux incident 70 choisi dépend du type de matériau de l'échantillon 20 à caractériser optiquement. Typiquement, pour des matériaux spéculaires, on préfère une taille réduite du faisceau lumineux incident 70, afin d'avoir une précision optimale au niveau du pic de spécularité. Pour des matériaux plus diffus, c'est-à-dire qui ont tendance à diffuser la lumière uniformément dans toutes les directions de l'espace, on peut utiliser une taille de faisceau plus large.

Par exemple, une taille de faisceau lumineux incident 70 plus large est idéale pour la caractérisation de matériaux texturés, dont la BRDF peut fortement varier d'un point à l'autre de l'échantillon 20. Ainsi, comme la BRDF est caractérisée par la lumière émise par rapport la lumière reçue, en prenant une taille de faisceau plus large on moyenne la mesure afin de gagner en représentativité, ce qui est valable uniquement dans le cas (premier mode de réalisation décrit ultérieurement) où la caméra 50 scanne l'écran dispersif 40 et non pas l'échantillon. Dans le deuxième mode de réalisation décrit ultérieurement, dans lequel la caméra hyperspectrale 50 scanne l'échantillon 20, il est préférable que le faisceau lumineux soit large. Dans ce deuxième mode de réalisation, la mesure est réalisée pixel par pixel de la caméra hyperspectrale 50 : il n'y a pas de moyennage au niveau de la mesure. On peut toutefois réaliser un moyennage, par calcul logiciel, en moyennant numériquement plusieurs mesures de plusieurs pixels adjacents.

On peut prévoir de disposer un filtre polarisé linéairement, et dont on peut faire varier l'orientation, devant la caméra hyperspectrale 50. À partir de 3 directions de polarisation, en l'espèce 0°, 45° et 90°, on peut alors caractériser la polarisation de la lumière, grâce aux matrices de Mueller, ce qui permet de mesurer la BRDF ou BTDF polarisée par exemple des vitres, pare-brises etc. qui polarisent la lumière, ce qui est d'intérêt notamment dans la simulation des véhicules automobiles et des vitrages des bâtiments en architecture.

La source de lumière 30 peut être équipée d'un filtre polarisant. La rotation de l'ensemble (source de lumière 30 + filtre polarisant) autour de l'axe optique de la source de lumière 30, grâce au bras robotisé, permet la modification de la direction de polarisation de la lumière incidente sur l'échantillon, sans faire appel à un système d'automatisation complémentaire pour tourner le filtre par rapport à la source et ainsi obtenir le même effet.

De la même façon, on peut équiper le dispositif de prise de vue multicapteurs d'un filtre polarisant. On peut alors prévoir que c'est le dispositif de prise de vue multicapteurs qui est monté sur un bras robotisé et que l'échantillon est alors posé sur un support fixe. La rotation du dispositif de prise de vue multicapteurs autour de son axe optique permet la modification de la direction de polarisation de la lumière analysée, sans avoir à utiliser un dispositif d'automatisation complémentaire pour la rotation du filtre par rapport au dispositif de prise de vue multicapteurs.

Ainsi, l'orientation de la direction de polarisation peut être modifiée grâce aux bras robotisés eux-mêmes, en faisant tourner l'ensemble source de lumière 30 + filtre polarisé et/ou dispositif de prise de vue multicapteurs + filtre polarisé.

On peut prévoir que la source de lumière 30 est exempte de fibres optiques, qui ont l'inconvénient de modifier leur absorption lumineuse lorsqu'elles sont déformées et impose alors toute une phase de calibration très fine pour compenser cette modification, et nécessite de s'assurer que les déformations des fibres sont reproductibles lors du fonctionnement du système.

### Ecran dispersif

On prévoit un écran dispersif 40, de préférence qui possède une haute réflexion lambertienne, c'est-à-dire supérieure à une valeur seuil prédéterminée. Par exemple on prévoit un écran comprenant un revêtement en fluoropolymère.

L'écran dispersif 40 est éventuellement souple.

En l'espèce, on prévoit un écran dispersif 40 en Spectralon (marque déposée) ; il diffuse uniformément dans toutes les directions de l'espace environ 99% de la lumière reçue, ce qui permet de s'affranchir d'une orientation parfaite de l'écran dispersif 40 par rapport à l'échantillon 20. Par concision, seul le Spectralon sera décrit ici comme écran dispersif 40. Aussi, le caractère « marque déposée » de celui-ci sera omis dans le reste de la présente description.

L'écran dispersif 40 matérialise un ensemble de directions sphériques vers lesquelles l'échantillon 20 réfléchit la lumière incidente pour le premier mode de réalisation (décrit ultérieurement). Pour le deuxième mode de réalisation (décrit ultérieurement), l'écran dispersif 40 réfléchit directement la lumière de la source de lumière pendant la phase de calibration photométrique.

Par exemple, l'écran dispersif 40 présente une forme plane, de préférence rectangulaire, ou convexe, par exemple partiellement cylindrique ou au moins semi-hémisphérique.

Par exemple l'écran dispersif 40 présente des dimensions de 200*200 mm².

### Echantillon

On prévoit un échantillon 20 dont le revêtement est un matériau dont on vise à générer des images de synthèse ou à caractériser, par exemple à des fins de contrôle qualité.

À titre d'exemples non limitatifs, on peut prévoir :
- un échantillon 20 de tôle peinte pour générer le rendu d'un véhicule automobile dont la carrosserie est ou sera réalisée avec ladite tôle ;
- un échantillon 20 de verre particulier (par exemple polarisant) pour générer le rendu d'un immeuble équipé de fenêtres réalisées à partir dudit verre particulier ;
- etc.

L'échantillon 20 est de préférence plan. Il peut comprendre des micro reliefs et/ou présenter une texture. La BRDF d'un échantillon peut être constante sur tout l'échantillon mais avec des variations de normales localement dans le cas de micro reliefs. Avec une texture, la BRDF d'un échantillon est caractérisée par l'ensemble des BRDF, qui sont différentes en différents points de l'échantillon.

De préférence, l'échantillon 20 présente une surface supérieure à 2 mm².

### Dispositif de prise de vue multicapteurs

De préférence, on prévoit que le dispositif de prise de vue multicapteurs est une caméra hyperspectrale 50.

Une caméra hyperspectrale 50 génère une image comprenant un ensemble de couches superposées dont chaque couche correspond respectivement à un capteur configuré pour n'être sensible qu'à une unique longueur d'onde quasi-monochromatique.

En l'espèce, on prévoit une caméra hyperspectrale 50 à 946 couches, qui permet d'analyser une fenêtre spectrale de 400 à 1000 nanomètres avec une résolution d'environ 0.64 nm et de connaître le spectre émis par un ensemble de points physiques observés dans la scène sur 946 couches au lieu de 3 couches pour une caméra RGB.

Par rapport à une caméra RGB, le rapport signal sur bruit d'une caméra hyperspectrale 50 est divisé par le nombre de couches ; il est donc avantageux de respecter au moins l'un des critères suivants :
- beaucoup d'énergie incidente, c'est-à-dire supérieure à une valeur seuil prédéterminée, d'où en l'espèce une source de lumière 30 capable d'émettre jusqu'à 1.000.000 de lux afin que la lumière réfléchie par l'écran dispersif 40 ou le matériau de l'échantillon 20 contienne suffisamment d'énergie;
- temps de pause long, c'est-à-dire supérieur à une valeur seuil prédéterminée.

Par l'acquisition d'une image hyperspectrale de l'écran on obtient l'information concernant la lumière émise vers les directions sphériques matérialisées par l'écran dispersif 40.

Une caméra hyperspectrale 50 comprend un objectif qui permet l'analyse d'une unique colonne de la scène observée, c'est-à-dire un empilement de pixels, en l'espèce de 2184 pixels, contrairement aux capteurs CCD par exemple qui analysent des colonnes et des lignes. Le champ d'observation 51 de la caméra hyperspectrale 50 est en forme d'éventail.

Derrière l'objectif, la caméra hyperspectrale 50 comprend un dispositif de séparation des longueurs d'onde, par exemple des prismes, réseaux de diffraction, etc. qui permet la décomposition spectrale.

En sortie du dispositif de séparation des longueurs d'onde se trouve un capteur 2D (typiquement CCD ou CMOS / SCMOS).

Le dispositif de séparation des longueurs d'onde permet, pour un pixel de la colonne, de séparer la lumière incidente captée par ledit pixel selon toutes ses longueurs d'onde (en l'espèce 946 couches) et, en sortie de celui-ci, d'impressionner une ligne du capteur 2D. La largeur du capteur 2D doit donc être supérieure ou égale au nombre de couches de la caméra hyperspectrale 50.

On a donc une dimension spatiale sur une colonne de la caméra hyperspectrale 50, combinée à une dimension spectrale par ligne du capteur 2D.

La caméra hyperspectrale 50 est montée sur un dispositif mécanique d'observation de la scène, en l'espèce l'écran dispersif 40 ou l'échantillon 20, par exemple un moteur pas à pas, pour scanner celle-ci par rotations successives autour d'un axe vertical.

En fonctionnement, la caméra hyperspectrale 50 scanne l'écran dispersif 40 ou l'échantillon 20 colonne par colonne et donne le spectre (dont on peut déduire la luminance et la radiance) en chaque pixel de l'image hyperspectrale. Chaque pixel de l'image hyperspectrale correspond à une direction sphérique de l'espace vers laquelle le matériau de l'échantillon 20 réfléchit la lumière. Il reste alors à faire correspondre les directions sphériques d'observation (θ_out, ϕ_out) aux pixels de l'image hyperspectrale.

Dans le mode de réalisation avec une cellule 100 comprenant un laser à balayage, la caméra hyperspectrale 50 est positionnée au-delà du champ d'observation dudit laser à balayage.

### Calibration

De préférence on prévoit de calibrer préalablement le dispositif selon l'invention.

De préférence, on prévoit au moins l'une parmi :
- une calibration géométrique, qui vise à obtenir une correspondance entre un pixel et les valeurs de θ_in, ϕ_in, θ_out, ϕ_out pour une incidence donnée, ainsi que x et y dans le deuxième mode de réalisation décrit ultérieurement ; et
- une calibration photométrique, qui vise à obtenir des mesures relatives entre un échantillon et un matériau de référence ;
les calibrations étant décrites ultérieurement.

### Fonctionnement

L'une au moins parmi la BRDF et la BTDF d'un échantillon 20 est mesurée à l'aide du dispositif de mesure qui consiste à mesurer, pour chaque direction sphérique possible de la lumière incidente, la lumière réfléchie 80 ou transmise par l'échantillon 20 dans toutes les directions sphériques de l'espace autour dudit échantillon 20.

Afin d'obtenir la BRDF d'un échantillon 20, il est nécessaire de mesurer la lumière réfléchie 80 par celui-ci pour différents angles d'incidence.

Ainsi, on a un processus de mesure qui consiste à enregistrer les mesures de la caméra hyperspectrale 50 pour une position relative prédéterminée de la source de lumière 30 par rapport à l'échantillon 20.

On prévoit donc avantageusement un système de positionnement relatif de l'échantillon 20 et de la source de lumière 30.

Le processus de mesure est itératif : on modifie la position relative de la source de lumière 30 par rapport à l'échantillon 20 dans une nouvelle position relative prédéterminée et on enregistre les mesures de la caméra hyperspectrale 50, etc.

À cet effet, on peut prévoir que la source de lumière 30 est montée sur un système mécanique relié à un ordinateur capable de piloter la modification de son angle d'incidence par rapport à la normale à l'échantillon 20. Les valeurs d'orientations prises par la source de lumière 30 par rapport à la normale à l'échantillon 20 peuvent être comprises entre 0° et 180°. De préférence à chaque mesure, seule l'inclinaison de la source de lumière 30 varie.

Lorsque les valeurs d'orientation prises par la source de lumière 30 sont comprises entre 250° et 90°, on mesure la part de lumière réfléchie par l'échantillon 20 vers l'écran dispersif 40 recouvrant en l'espèce une portion de demi-hémisphère au-dessus du matériau.; et
- lorsque les valeurs d'orientation prises par la source de lumière 30 sont comprises entre 90° et 180°, on mesure la part de lumière transmise par l'échantillon 20 vers l'écran dispersif 40 recouvrant une portion de demi-hémisphère au-dessus du matériau.

Un échantillon 20 translucide peut être éclairé depuis le demi hémisphère opposé à celui dans lequel l'écran dispersif 40 est positionné, ce qui permet la mesure de la BTDF

On peut prévoir l'un quelconque des deux modes de réalisation décrits ci-dessous dans lesquels 2 des 3 éléments (échantillon 20 ; source de lumière 30 et caméra hyperspectrale 50) sont mobiles et le 3^{ème} est immobile en translation.

De préférence, la caméra hyperspectrale 50 est immobile en translation sur un trépied et montée pour sa rotation autour d'un axe vertical grâce à un moteur pas à pas, à l'instar d'une caméra hyperspectrale 50 montée sur un satellite d'observation de la Terre : le satellite est immobile et la Terre tourne dans le champ d'observation dans le repère lié au satellite. Dans ce cas, l'échantillon 20 et la source de lumière 30 sont mobiles, par exemple sur les bras articulés de la cellule 100 décrite précédemment, ce qui permet avantageusement de changer de capteur facilement, y compris par exemple pour échanger la caméra hyperspectrale 50 contre un appareil photo RGB.

Pour l'analyse avec un filtre polarisé, il peut être avantageux de monter la caméra hyperspectrale 50 sur le bras robotisé.

### Premier mode de réalisation

Dans un premier mode de réalisation, on filme avec la caméra hyperspectrale 50 uniquement l'écran dispersif 40, c'est-à-dire qu'on ne filme pas l'échantillon 20.

On peut mettre en oeuvre une calibration géométrique dite absolue ou calibration géométrique dite relative.

L'écran dispersif 40 est filmé par la caméra hyperspectrale 50 pour l'analyse de l'échantillon 20 et pour la calibration photométrique décrite ci-après.

**Dans une première variante de calibration géométrique,** dite absolue, on prévoit de scanner avec la caméra hyperspectrale 50 un élément à réflexion spéculaire, en l'espèce un miroir, disposé à la place de l'échantillon 20, de préférence avec une source lumineuse de très faible diamètre équivalent.

On peut alors caractériser le pic spéculaire et établir une correspondance, sous forme de table de correspondance enregistrée dans une mémoire, entre un point de coordonnées x, y de l'élément à réflexion spéculaire, et sa réflexion sur l'écran dispersif 40, pour une pluralité d'incidences ; il faut alors, ensuite, pour les mesures de l'échantillon 20 que l'on cherche à caractériser optiquement que ledit échantillon 20 ait exactement la même orientation que le miroir pour un angle d'incidence donné et que l'écran dispersif 40 soit dans la même position.

Ceci peut être obtenu en utilisant un bras robotisé pour positionner et orienter d'abord le miroir, puis l'échantillon de la même façon.

Plus précisément, l'écran dispersif 40 de référence est remplacé par un miroir de référence dont on connaît les coefficients de Fresnel spectraux pour différentes incidences de la lumière incidente sur le miroir de référence.

On peut alors mesurer la BRDF d'une part du miroir de référence, et d'autre part de l'échantillon 50 à caractériser, et en déduire les coefficients de Fresnel spectraux de l'échantillon 50, par simple rapport.

**Dans une deuxième variante de calibration géométrique,** dite relative, on n'utilise pas d'élément à réflexion spéculaire et on éclaire directement l'échantillon 20 par la source de lumière. Dans cette variante, on prévoit, pour un angle d'incidence donné, de déterminer le pixel de l'image hyperspectrale dont l'intensité est maximale. On fait l'hypothèse que la majorité des matériaux ont un pic de spécularité dont le maximum est positionné exactement au niveau de la direction de Descartes. On peut donc sélectionner le pixel dont l'intensité (qui est l'intégrale du spectre) est maximale et considérer que ce pixel correspond à la direction de Descartes. On peut ensuite répéter ce processus pour une pluralité d'angles d'incidence et interpoler entre les valeurs déterminées et ainsi établir une correspondance, sous forme de table de correspondance enregistrée dans une mémoire, entre un point de coordonnées X, Y de l'échantillon 20, et sa réflexion sur l'écran dispersif 40, pour une pluralité d'incidences.

A titre d'alternative ou de combinaison, on peut mettre en oeuvre une **calibration photométrique,** dans laquelle on réalise une série d'images hyperspectrales pour lesquelles un matériau de référence, dont au moins la BRDF est connue, est disposé à la place de l'échantillon 20 à caractériser. Avantageusement, on utilise comme matériau de référence un morceau de Spectralon. De préférence, les dimensions du matériau de référence sont supérieures ou égales à celles de la zone de l'échantillon 20 à caractériser éclairée par la source de lumière.

Pour chaque image hyperspectale, on peut alors comparer la valeur de la mesure de la caméra hyperspectrale 50, pour chaque pixel, à une valeur de référence et déterminer ainsi la transformation à utiliser pour obtenir des données qui sont celles d'une BRDF en sortie de la caméra hyperspectrale 50.

En effet, ce qui est observé sur l'écran dispersif 40 est la lumière renvoyée par le matériau de référence (morceau de Spectralon), dont la valeur de référence est sa BRDF, qui est connue, et vaut rho / pi pour toute direction de réflexion et pour toute longueur d'onde, avec rho le facteur de réflexion = 0.99 environ (calibré par le fabriquant du Spectralon). Avec un matériau de référence dont la BRDF est constante pour une longueur d'onde donnée, on obtient ainsi une table de correspondance, enregistrée dans une mémoire, en l'espèce une table de coefficients multiplicatifs, par incidence et par longueur d'onde, à appliquer ensuite à l'échantillon 20 à caractériser.

Les mesures de spectre sur l'écran dispersif 40 de l'échantillon 20 peuvent ensuite être transformées en valeurs absolues de BRDF puisque l'on sait quelle transformation il faut leur appliquer ; c'est-à-dire la même que celle qu'il faut appliquer pour passer des spectres mesurés lorsque l'on utilise le matériau de référence (morceau de Spectralon) à la place de l'échantillon 20 à la valeur de BRDF du Spectralon qui est connue. A noter que cette calibration permet de corriger les défauts de la source de lumière 30 incidente et de la configuration géométrique entre la caméra hyperspectrale 50, l'écran dispersif 40 et l'échantillon 20.

Dans ce premier mode de réalisation, illustré figure 2, l'écran dispersif 40 recouvre par exemple une portion d'hémisphère, en l'espèce une portion de demi hémisphère, au-dessus de l'échantillon 20 du matériau utilisé, afin qu'un maximum de la lumière réfléchie 80 par l'échantillon 20 soit renvoyée vers l'écran dispersif 40.

Dans ce mode de réalisation, l'échantillon 20 est positionné de préférence horizontalement.

L'écran dispersif 40 est positionné sur un support, de préférence orientable, dont l'orientation est fixée une fois pour toute avant une série de mesures, de sorte que celui-ci ait la même orientation pour toutes les incidences de la lumière.

L'écran dispersif 40 réfléchit la lumière vers la caméra hyperspectrale 50. Ainsi, la mesure de la lumière issue de l'échantillon 20 vers une pluralité de directions est rendue possible.

Ainsi, une part de la lumière incidente de la source de lumière 30 est rèflèchie 80 ou transmise (selon le type de mesure) par l'échantillon 20 vers l'écran dispersif 40, et la caméra hyperspectrale 50 est configurée pour scanner l'écran dispersif 40.

L'échantillon 20 est ainsi disposé entre l'écran dispersif 40 et la source de lumière 30.

Pour chacune des orientations de la source de lumière 30 par rapport à la normale à l'échantillon 20, la caméra hyperspectrale 50 scanne l'écran dispersif 40 sur lequel est réfléchi en un faisceau réfléchi 90 une part de la lumière transmise ou réfléchie par l'échantillon 20.

A la fin, on obtient autant d'images hyperspectrales que d'incidences de la source de lumière 30.

L'échantillon 20 réfléchit la lumière préférentiellement autour du pic de spécularité. Dans la partie diffuse, il peut y avoir très peu d'énergie réfléchie par l'échantillon 20. Il peut donc être nécessaire de réaliser des mesures avec différents temps d'acquisition. Un temps d'acquisition de 5000 ms permet d'avoir une mesure précise dans la partie diffuse. Une mesure avec un temps d'acquisition de 15 ms permet d'avoir une mesure précise au niveau de la tâche spéculaire, sans saturation. Alternativement, on peut prévoir un unique temps d'acquisition court, par exemple environ 15 ms, en modifiant le flux de la source de lumière 30 donc son éclairement (nombre de lux). Ainsi, la durée totale de mesure est réduite, c'est l'avantage que procure une source de lumière puissante.

Chaque pixel de l'image hyperspectrale correspond à une direction sphérique de l'espace vers laquelle l'échantillon 20 réfléchit la lumière. Il reste alors à faire correspondre les directions sphériques d'observation (Θ_out, ϕ_out) aux pixels de l'image hyperspectrale.

Comme vu précédemment, pour chaque angle d'incidence de la source de lumière 30, il faut réaliser une acquisition avec la caméra hyperspectrale 50 de l'écran dispersif 40 en remplaçant le matériau de l'échantillon 20 à mesurer par un matériau dispersif dont on connaît les propriétés optiques, en l'espèce un morceau de Spectralon. Cela double donc le nombre d'acquisitions nécessaires avec la caméra hyperspectrale 50.

Il est possible d'effectuer une calibration photométrique ou géométrique une seule fois, puis d'effectuer des mesures sur autant de matériaux que désirés, si la configuration géométrique du système ne change pas d'une mesure à l'autre. Les bras robotisés précis permettent en effet de reproduire les configurations d'un matériau à l'autre. Donc en phase de production, il n'est pas nécessaire de refaire une calibration photométrique entre deux matériaux différents.

### Deuxième mode de réalisation

**Dans une première variante d'un deuxième mode de réalisation,** on filme l'échantillon 20 avec la caméra hyperspectrale 50.

Pour la calibration géométrique, on prévoit d'utiliser uniquement une calibration géométrique absolue dans laquelle on remplace l'échantillon 20 par un élément optique de référence, qui comprend un ensemble de points caractéristiques dont la position est connue, par exemple une mire, en l'espèce une mire à damiers noirs et blancs. On scanne alors ledit élément optique de référence avec la caméra hyperspectrale 50 et on obtient une image hyperspectrale par position relative de l'élément optique de référence et de la caméra hyperspectrale 50. Un éclairage ambiant peut suffire, il n'est pas forcément nécessaire d'allumer la source de lumière 30.

Pour déterminer les valeurs θ_out, ϕ_out, x, y, on peut détecter les coins des cases du damier, par exemple selon la méthode de Zhang (décrite dans Zhang, Z. (2000). « A flexible new technique for caméra calibration ». IEEE Transactions on pattern analysis and machine intelligence, 22(11), 1330-1334).

En effet, la mire est positionnée à la place de l'échantillon 20, ce qui permet de déterminer les paramètres intrinsèques (focale, déformation induite par l'objectif) et extrinsèque (position et orientation) de la caméra hyperspectrale 50 par rapport à chaque pixel. A partir de là, connaissant les coordonnées physiques des coins des cases du damier dans un repère lié à l'échantillon 20, la détection des pixels correspondant à ces coins établit la correspondance entre coordonnées x,y et coordonnées u,v du pixel dans l'image pour chaque coin de mire. Une interpolation permet alors de connaitre les x,y pour tous les pixels de l'image hyperspectrale. Connaissant la position et l'orientation de la caméra hyperspectrale 50 par rapport à la mire ainsi qu'un modèle de l'objectif (obtenu par la méthode de Zhang) on en déduit alors les θ_out ϕ_out pour chaque pixel de l'image hyperspectrale.

Les valeurs θ_in et ϕ_in sont obtenues en considérant un modèle de la source de lumière (origines et directions d'un ensemble de rayon lumineux issus de la source), chaque rayon étant incident en un point de l'échantillon avec une direction déterminée par le modèle, d'où l'on peut déduire θ_in et ϕ_in dès lors que l'on connait la position et l'orientation de la source de lumière 30 par rapport à l'échantillon 20.

Ainsi on peut avoir une calibration géométrique qui permet de déterminer quel pixel de l'écran dispersif 40 correspond à quelle direction de réflexion de l'échantillon 20.

De préférence on enregistre dans une table de correspondance, la correspondance entre chaque pixel u,v de la caméra hyperspectrale, et les valeurs θ_in et ϕ_in ; θ_out et ϕ_out ; et x et y.

A titre d'alternative ou de combinaison, on peut mettre en oeuvre une **calibration photométrique** telle que décrite pour le premier mode de réalisation, dans laquelle le matériau de référence est également avantageusement un morceau de Spectralon. Les positions relatives du matériau de référence et de la caméra hyperspectrale 50 sont les mêmes que les positions relatives de l'échantillon 20 à caractériser et de la caméra hyperspectrale 50.

On réalise alors un ensemble d'images hyperspectrales du matériau de référence. Pour chaque pixel, le spectre obtenu doit être égal à rho/pi. On obtient ainsi une table de correspondance, en l'espèce une table de coefficients mutliplicatifs, longueur d'onde par longueur d'onde et pixel par pixel, à appliquer ensuite à l'échantillon 20 à caractériser, comme décrit précédemment.

Dans le deuxième mode de réalisation, illustré figure 3, la caméra hyperspectrale 50 est configurée pour scanner directement l'échantillon 20, et donne accès à la part de la lumière réfléchie par le matériau de l'échantillon 20 vers celle-ci.

Dans ce mode de réalisation, l'échantillon 20 est positionné préférentiellement verticalement, pour pouvoir être vu sous le plus grand angle solide possible par la caméra hyperspectrale 50.

**Dans une deuxième variante du deuxième mode de réalisation,** on filme avec la caméra hyperspectrale 50 l'échantillon 20 et un écran dispersif dit « compensateur » de préférence simultanément, l'écran dispersif compensateur étant disposé sur un porte échantillon (non illustré) comprenant au moins deux compartiments, un compartiment comprenant l'échantillon 20 et un autre compartiment comprenant l'écran dispersif compensateur, les deux compartiments étant coplanaires et permettant un réglage en hauteur de telle sorte que les surfaces supérieures de l'échantillon 20 et de l'écran dispersif compensateur soient coplanaires

De préférence, les dimensions de l'écran dispersif compensateur sont inférieures ou égales à celles de l'échantillon 20.

Le principe de fonctionnement est alors de réaliser un ensemble de prises de vue par la caméra hyperspectrale du porte échantillon équipé de l'écran dispersif compensateur dans un compartiment et de l'écran dispersif 40 dans l'autre compartiment, puis de réaliser un ensemble de prises de vue par la caméra hyperspectrale du porte échantillon équipé de l'écran dispersif compensateur dans un compartiment et de l'échantillon 20 dans l'autre compartiment.

Le porte échantillon est configuré de sorte que l'écran dispersif compensateur et l'échantillon 20 sont visibles simultanément dans le champ de vue de la caméra hyperspectrale, de sorte que l'écran dispersif compensateur soit visible pour chaque colonne d'analyse de l'échantillon 20.

Le porte échantillon est configuré également de sorte que la source de lumière 30 éclaire à la fois l'échantillon 20 et l'écran dispersif compensateur. Avantageusement, le faisceau de lumière incidente issu de la source de lumière 30 est large, c'est-à-dire présente une largeur supérieure à une valeur seuil prédéterminée. De préférence, le flux lumineux produit par la source de lumière 30 est élevé, c'est-à-dire dont la valeur est supérieure à une valeur seuil prédéterminée.

L'écran dispersif compensateur est de même type, et de préférence identique à l'écran dispersif 40 utilisé pour la calibration.

On peut ainsi réaliser une calibration radiométrique différentielle, i.e. calculer le spectre moyen, pour une colonne de l'image hyperspectrale, des pixels correspondant à l'écran dispersif compensateur. Ceci pour l'image où l'on filme l'échantillon 20, et pour l'image où l'on filme l'écran dispersif 40 à la place de l'échantillon 20.

La comparaison de ces deux spectres moyens permet de calculer un vecteur spectral correctif pour la colonne de l'image correspondant à l'échantillon, pour se ramener virtuellement à des conditions d'éclairage identiques à celles observées lorsque c'est l'écran dispersif 40 qui est observé.

Grâce à cette configuration, on peut compenser les éventuelles dérives de la source de lumière 30 et les éventuelles dérives de la caméra hyperspectrale.

Pour la variante de calibration géométrique utilisant un miroir de référence, l'écran dispersif compensateur peut être utilisé de la même façon pour compenser la dérive de la source de lumière 30.

On peut prévoir un filtre absorbant qui coupe une partie du flux lumineux, de sorte que l'écran dispersif compensateur reçoit l'intégralité du flux lumineux émis par la source de lumière 30, mais que l'échantillon 20 ou le miroir ne reçoit qu'une fraction dudit flux lumineux.

### Performances

Les performances du dispositif selon l'invention sont décrites ci-dessous, en référence au premier ou au deuxième mode de réalisation.

### • Résolution zénithale

La résolution zénithale est liée à l'échantillonnage selon l'angle d'observation Θ_out, qui dépend directement de la résolution de la caméra hyperspectrale 50 et de sa distance par rapport à l'écran dispersif 40.

La résolution angulaire de la vision de l'homme est proche de 0,03°, ce qui permet à l'œil de visualiser les micro-défauts d'une surface et donc de différencier des matériaux les uns par rapport aux autres. On prévoit donc avantageusement d'atteindre une résolution zénithale de l'ordre de 0.03°.

La caméra hyperspectrale 50 utilisée réalise en l'espèce des acquisitions colonne par colonne, par exemple de 1080 ou 2184 pixels. En réalisant une acquisition de l'écran dispersif 40 avec la caméra hyperspectrale 50 (1^{er} mode de réalisation), on peut obtenir une résolution angulaire allant jusqu'à 0.03°. Cette résolution permet la caractérisation de matériaux spéculaires. Une résolution inférieure peut être suffisante pour des matériaux diffus.

### • Résolution azimutale

La résolution azimutale dépend de la précision du système de motorisation utilisé par la caméra hyperspectrale 50.

On prévoit avantageusement d'atteindre une résolution azimutale de l'ordre de 0.1°.

### • Résolution en longueur d'onde

La résolution en longueur d'onde dépend de la résolution spectrale de la caméra hyperspectrale 50. En l'espèce, la caméra utilisée par la demanderesse possède une résolution en longueur d'onde de 0.64 nm sur la bande visible et proche infrarouge [400 nm ; 1000 nm].

### • Durée d'exposition de la caméra hyperspectrale 50

La durée d'acquisition de la lumière réfléchie par l'échantillon 20 vers l'écran dispersif 40 dépend de la vitesse d'acquisition de la caméra hyperspectrale 50 et de la résolution azimutale souhaitée.

La résolution azimutale peut être adaptative. Elle peut varier en fonction du type de matériau à caractériser. Elle nécessite d'être plus précise pour un matériau spéculaire. La précision peut être diminuée pour un matériau diffus. Une résolution azimutale de 9° est suffisante pour les matériaux diffus.

### • Durée de mesure de BRDF et BTDF

Pour chaque angle d'incidence de la source de lumière 30, afin de calibrer les mesures, il faut réaliser une première image hyperspectrale avec le matériau à caractériser optiquement et une deuxième image hyperspectrale avec un matériau optiquement connu, en l'espèce le Spectralon dans les mêmes conditions d'éclairage. La durée de mesure d'une BRDF ou d'une BTDF dépend de l'échantillonnage utilisé pour les directions sphériques de la lumière incidente.

Si on prend en compte 10 valeurs d'orientations de la source de lumière 30 de 0° à 90°, par exemple par pas de 10°, une BRDF peut être mesurée en 2*2*10*10 = 400 secondes, soit 6 minutes 40 secondes, pour un échantillon 20 isotrope, avec :
- 2 pour une acquisition avec un flux élevé pour la source de lumière, et une acquisition avec un flux peu élevé ;
- 2 correspondant à 1 BRDF pour l'échantillon 20 et 1 BRDF pour le Spectralon ;
- 10 le nombre de valeurs d'orientations de l'angle d'incidence, et
- 10 le temps de mesure en secondes d'une acquisition hyperspectrale de l'écran dispersif 40 (pour une acquisition de 10 000 / 15 = 667 colonnes de la scène ce qui correspond à un angle scanné de 67°, avec un pas angulaire de 0.1°)

Cette durée est divisée par deux (soit 3 minutes 20 secondes) si l'on a auparavant effectué la mesure pour le Spectralon.

Si le matériau de l'échantillon 20 est translucide, on réalise également des mesures avec une orientation de la source de la lumière par rapport à l'échantillon 20 comprise entre 90° et 180°.

Comme vu ci-dessus, pour 20 valeurs d'orientations de la source de lumière 30 incidente, une BTDF peut être mesurée en 2*2*20*10 = 800 secondes soit 13 minutes 20 secondes.

Par ailleurs, il peut être utile de s'intéresser au caractère éventuellement anisotrope de l'échantillon 20. En effet, dans le cas d'une rotation de l'échantillon 20 dans le plan incident, l'aspect dudit échantillon 20 n'est pas modifié si celui-ci est isotrope alors qu'il est modifié si celui-ci est anisotrope.

La caractérisation optique d'un matériau anisotrope nécessite, elle, d'échantillonner les directions sphériques de la source de lumière 30 selon ϕ_in. Pour cela, il faut procéder à une rotation de l'échantillon 20 à mesurer autour de sa normale, ou alternativement à un modification de la valeur de l'angle ϕ_in par déplacement et rotation de la source de lumière. Cette rotation peut être automatisée et on peut prendre 5 orientations différentes de l'échantillon 20 à caractériser. Il faut alors augmenter le nombre d'acquisition de la caméra hyperspectrale 50. La durée de la mesure d'une BRDF avec 10 angles d'incidence de la source de lumière 30 sera dans ce cas de 2*10*10*5 (matériau anisotrope) + 2*10*10*5 (Spectralon) = 2000 secondes, soit 33 minutes 20 secondes. Une BTDF avec 10 angles d'incidence de la source de lumière 30 sera mesurée en en 2*10*10*5 (matériau anisotrope) + 2*10*10*5 (Spectralon) = 2000 secondes, soit 33 minutes 20 secondes. Un matériau à la fois réfléchissant et transmitif peut être caractérisé par sa BRDF et sa BTDF, ce qui nécessite au total 33 minutes 20 secondes (pour la BRDF) et 33 minutes 20 secondes (pour la BTDF) soit 1 heure 06 minutes 40 secondes.

### Calculs

Une fois les mesures effectuées grâce au dispositif selon l'invention, on prévoit ensuite de reconstruire, c'est-à-dire calculer, une BRDF ou une BTDF à partir desdites mesures selon le premier ou le deuxième mode de réalisation comme décrit ci-dessous.

### Dans le 1^{er} mode de réalisation.

Dans un exemple purement illustratif, on prévoit un échantillon 20 en matériau isotrope, non translucide.

Par exemple, 10 mesures sont effectuées à partir de 10 positions respectives de la source de lumière 30 (θ_in = 5°, θ_in = 10°, θ_in = 20°, θ_in = 30°, θ_in = 40°, θ_in = 45°, θ_in = 50°, θ_in = 60°, θ_in = 70° et θ_in = 80°). Il y a autant d'acquisitions hyperspectrales avec le matériau de l'échantillon 20 à caractériser optiquement qu'avec le matériau de référence dont on connaît les propriétés optiques.

Pour chacun des matériaux (échantillon 20 et de référence) le nombre d'images hyperspectrales correspond au nombre d'angles d'incidence de la source de lumière 30 éclairant l'échantillon 20.

Pour chacune de ces images hyperspectrales, on cherche le pixel présentant le plus d'énergie, c'est-à-dire le plus lumineux et on établit une correspondance entre l'image hyperspectrale de l'échantillon 20 et l'image hyperspectrale du matériau de référence, pour un même angle d'incidence.

D'après la loi de Snell-Descartes on sait qu'un matériau a tendance à réfléchir la lumière préférentiellement autour du pic de spécularité correspondant au symétrique du faisceau lumineux par rapport au plan tangent au miroir au point d'incidence.

Ainsi, le pixel présentant le plus d'énergie correspond aux angles d'observation (θ_out = θ_in, par exemple 20° ; et ϕ_out = ϕ_in, par exemple 0°). On analyse l'image hyperspectrale du matériau correspondant à une position de la source à 20° par rapport à la normale à l'échantillon 20.

On réalise cela pour chacune image hyperspectrale.

On trouve alors les pixels correspondants (θ_out = 5°, θ_out = 10°, θ_out = 20°, θ_out = 30°, θ_out = 40°, θ_out = 45°, θ_out = 50°, θ_out = 60°, θ_out = 70°, θ_out = 80°).

À partir de là, il est possible de réaliser une interpolation des angles d'observation compris entre 5° et 80° afin de trouver les autres θ_out. La précision zénithale peut être de 0.03°.

De même, il est possible de réaliser une extrapolation des mesures.

### Dans le 2^{ème} mode de réalisation

Dans le deuxième mode de réalisation, les mesures sont réalisées à l'aide d'un goniomètre et d'une source de lumière 30 à LED collimatée qui éclaire le matériau de l'échantillon 20 à caractériser optiquement. Alternativement, la source de lumière 30 peut être dispersive selon un cône, ce qui permet d'obtenir différents θ_in et ϕ_in sur l'échantillon 20, ce qui est avantageux par exemple pour un échantillon homogène, afin de disposer de différents θ_in et ϕ_in à partir d'une seule image hyperspectrale.

Au lieu de scanner l'écran dispersif 40 avec la caméra hyperspectrale 50 comme dans le 1^{er} mode de réalisation, celle-ci scanne ici directement l'échantillon 20. La lumière issue par l'échantillon 20, c'est-à-dire réfléchie ou transmise par celui-ci, est donc dirigée directement vers la caméra hyperspectrale 50, c'est-à-dire sans réflexion préalable sur l'écran dispersif 40.

Dans ce cas, l'échantillon 20 est éclairé par une source de lumière 30 dont la surface d'intersection avec l'échantillon 20 est supérieure à une valeur seuil prédéterminée. On préfère donc avoir une tâche de lumière à un point de lumière.

Le spectre de la source de lumière 30 collimatée présente de l'énergie sur toutes les longueurs d'onde de la fenêtre visible. La source lumineuse présente par exemple des dimensions de 200 mm x 200 mm et est de préférence capable de délivrer un éclairement lumineux jusqu'à 30.000 lux.

De préférence, l'échantillon 20 est disposé verticalement, puis éclairé par la source de lumière 30 et alors scanné par la caméra hyperspectrale 50.

Il s'agit, pour chaque pixel de l'image hyperspectrale, de déterminer (θ_in, ϕ_in θ_out, ϕ_out, x, y), conformément à la procédure de calibration géométrique décrite précédemment.

Dans un premier temps, on réalise une succession d'acquisition des premières images hyperspectrales (scans) de l'échantillon 20 par la caméra hyperspectrale 50.

Dans un deuxième temps, on remplace ledit échantillon 20 par un écran dispersif 40 orienté exactement de la même façon que l'échantillon 20, de dimension supérieure ou égale à celle de l'échantillon, et on réalise une succession d'acquisition des deuxièmes images hyperspectrales (scans) dudit écran dispersif 40 avec les mêmes conditions d'éclairage (mêmes positions relatives) que celles de l'échantillon 20.

Ainsi pour un même pixel de l'image hyperspectrale, on a sur une première image : l'image (premier spectre) de la lumière réfléchie par l'échantillon 20 et sur une deuxième image, 5l'image (deuxième spectre) de la lumière réfléchie par l'écran dispersif 40, dans les mêmes conditions d'éclairage (intensité, orientation relative).

Quel que soit le premier ou le deuxième mode de réalisation, on peut alors calculer la BRDF dudit pixel par une formule mathématique connue. En l'espèce, la BRDF pour la longueur d'onde λ est la valeur du spectre de l'échantillon pour la longueur d'onde λ* rho (le facteur de réflexion de l'écran dispersif) pour la longueur d'onde λ / pi / valeur du spectre de l'écran dispersif 40 pour la longueur d'onde λ.

On obtient ainsi pour chaque pixel, et pour une pluralité d'angles d'incidence, les valeurs θ_in, ϕ_in, θ_out, ϕ_out, x, y, et λ ; avec
- x, y les coordonnées des points de l'échantillon dans un repère lié à l'échantillon, et
- λ la longueur d'onde du faisceau lumineux incident 70 de la source lumineuse.

Si l'échantillon 20 est homogène, c'est-à-dire plan et de couleur uniforme, alors les points sur l'échantillon 20 ont tous la même BRDF. On peut alors reconstruire la BRDF de l'échantillon 20 complet avec relativement peu d'images hyperspectrales.

Avec un échantillon 20 homogène, on peut prévoir de mettre en oeuvre une source lumineuse non collimatée (dispersive), ce qui permet de faire varier l'angle d'incidence pour une pluralité de pixels sur une seule image, donc d'avoir besoin de moins d'images qu'avec une source collimatée, donc d'être plus rapide.

Chaque scène ne nécessite qu'une seule prise de vue pour déterminer plusieurs valeurs de θ_in, ϕ_in et λ.

De la même manière, si l'échantillon 20 comprend un ensemble de zones homogènes, on peut alors reconstruire la BRDF de l'échantillon 20 complet par zones, en assignant un identifiant par zone et une BRDF par zone, ce qui permet également de reconstruire la BRDF de l'échantillon 20 complet avec relativement peu d'images hyperspectrales.

Grâce à cette configuration (observation par caméra hyperspectrale + éclairage de chaque point de l'échantillon par un faisceau incident provenant d'une seule direction), le résultat est équivalent à l'éclairage de la zone de l'échantillon définie par la surface apparente de l'échantillon vue par un pixel de la caméra hyperspectrale, ce qui évite le moyennage du premier mode de réalisation. Pour cela il faut juste s'assurer que chaque point de l'échantillon est éclairé par une unique direction de lumière, ce qui est le cas avec une source surfacique collimatée ou ponctuelle dispersive, mais qui ne serait pas le cas avec une source surfacique dispersive.

Si l'échantillon 20 est non homogène, par exemple parce qu'il comprend une couleur non uniforme, des motifs ou une texture, alors les points sur l'échantillon 20 n'ont pas tous la même BRDF.

Dans ce cas, on prévoit avantageusement de réaliser une classification des BRDF en 5fonction des pixels de la texture, tous les pixels d'une texture donnée ayant une même BRDF ponctuelle.

On peut alors également affecter un identifiant à chaque pixel, qui renvoie à une BRDF ponctuelle.

On obtient ainsi une BRDF globale texturée qui est la collection des BRDF ponctuelles.

Pour une BRDF ponctuelle, on peut prévoir de déterminer les valeurs θ_out, ϕ_out, qui correspondent au maximum de l'énergie réfléchie. Il existe en effet, une correspondance entre un pixel de l'image hyperspectrale et les variables échantillonnées : θ_in, ϕ_in, θ_out, ϕ_out, x, y, λ.

Cette correspondance est réalisée préalablement par un ensemble de mires positionnées en place de l'échantillon 20, illuminées par la source de lumière 30 et scannées par la caméra hyperspectrale 50. L'espace entre les mires est connu. Sur les images hyperspectrales, on peut alors déterminer l'espace entre les pixels correspondant aux mires, ce qui permet de déterminer pour chaque pixel, les coordonnées x,y du point correspondant de l'échantillon 20 dans le repère de l'échantillon 20.

Grâce aux mires, il est également possible de déterminer la position et l'orientation de la caméra hyperspectrale 50 par rapport à l'échantillon 20, ce qui permet de déterminer les valeurs θ_out, ϕ_out pour chaque pixel.

On peut aussi prévoir une étape d'interpolation entre les points des mires mesurées.

La position et l'orientation de la source lumineuse collimatée sont connues, donc les valeurs θ_in, ϕ_in sont connues. Puisque les valeurs θ_in, ϕ_in sont connues et les valeurs θ_out, ϕ_out déterminées, on peut alors calculer la normale locale à l'échantillon 20. On peut pour cela considérer en chaque point de l'échantillon 20 un modèle analytique de la BRDF (par exemple un modèle de Phong), qu'il faut orienter correctement dans la direction de la normale pour correspondre aux données mesurées, ce qui est mis en oeuvre par programmation informatique. Une fois que l'ajustement est réalisé, on connait la direction de la normale, donc les microreliefs de l'échantillon en considérant les différentes normales aux différents points x,y correspondant aux pixels u,v de l'image hypespectrale.

Pour chaque image, on fait ensuite varier l'orientation relative de l'échantillon 20, de la caméra hyperspectrale 50 et de la source lumineuse et on enregistre un ensemble d'images hyperspectrales pour chaque nouvelle orientation relative.

On peut également, comme pour le premier mode de réalisation, équiper la caméra hyperspectrale 50 d'un filtre polarisant.

Il est ainsi possible de suivre, d'image hyperspectrale en image hyperspectrale, la variation éventuelle de position d'un pixel correspondant à point physique donné de l'échantillon 20, y compris avec une lumière polarisée.

Grâce à cette configuration, l'invention permet notamment l'analyse de surfaces, par exemple de miroirs de télescopes.

Quel que soit le mode de réalisation, on peut prévoir que les mouvements relatifs sont pilotés par un ordinateur.

L'invention n'est pas limitée aux modes de réalisation précédemment décrits. Par exemple, on peut remplacer la caméra hyperspectrale 50 par une caméra monochromatique équipée d'un ensemble de filtres monochromatiques interchangeables, mais au prix d'un temps d'opération supérieur.

La présente invention permet une mesure spectrale combinée avec configuration « hors plan », c'est à dire pour des directions du rayon incident et réfléchi / transmis pas dans le même plan. L'invention permet également une mesure texturée avec une résolution fine, ce qui permet la caractérisation de paillettes de peintures, ce qui est utile notamment dans l'industrie automobile ou le bâtiment. Il est aussi possible de caractériser des matériaux translucides et d'obtenir des mesures de cartes normales ; le tout en un temps opérationnel, c'est à dire une durée de mesure de BRDF et BTDF très satisfaisante.

### Nomenclature

- 10: porte-échantillon / support d'échantillon
- 20: échantillon
- 30: source de lumière
- 40: écran dispersif
- 50: caméra hyperspectrale
- 51: champ d'observation de la caméra hyperspectrale
- 60: arceau d'un goniophotomètre
- 70: faisceau lumineux incident issu de la source de lumière
- 80: faisceau lumineux incident réfléchi par l'échantillon
- 90: faisceau lumineux 80 réfléchi par l'écran dispersif vers la caméra hyperspectrale
- 100: cellule
- 110: premier bras articulé
- 120: deuxième bras articulé

## Revendications

1. Dispositif optique pour la mesure des propriétés optiques des matériaux comprenant au moins l'une parmi la lumière réfléchie (BRDF) et la lumière transmise (BTDF) par le matériau d'un échantillon (20) dans toutes les directions sphériques de l'espace autour dudit échantillon (20), pour chaque direction sphérique de la lumière incidente, le dispositif comprenant :
- une source de lumière (30),
- un goniophotomètre configuré pour mesurer au moins l'un parmi :
∘ les directions de la lumière incidente en coordonnées sphériques (θ_in, ϕ_in),
∘ les directions de la lumière réfléchie en coordonnées sphériques (θ_out, ϕ_out),
**caractérisé en ce qu'**il comprend en outre :
- un dispositif de prise de vue multicapteurs, configuré pour déterminer le spectre d'émission de la lumière réfléchie ou transmise par l'échantillon vers un ensemble de points de la scène observée par le dispositif de prise de vue multicapteurs qui génère une image comprenant un ensemble de couches superposées dont chaque couche correspond respectivement à un capteur configuré pour n'être sensible qu'à une unique longueur d'onde quasi-monochromatique ;
le goniophotomètre se présentant sous la forme de cellule (100) comprenant :
- un premier bras articulé (110) en trois dimensions de l'espace et configuré pour supporter la source de lumière (30); et
- un deuxième bras articulé (120) en trois dimensions de l'espace et configuré pour supporter l'échantillon (20) ou un porte-échantillon (10) ;
les orientations relatives du premier bras articulé (110) et du deuxième bras articulé (120) étant pilotables ;
le dispositif comprenant optionnellement en outre ledit échantillon (20).

2. Dispositif selon la revendication 1, comprenant en outre un écran dispersif (40), dont la position et l'orientation spatiale sont de préférence réglables.

3. Dispositif selon la revendication 2, comprenant en outre une mémoire comprenant au moins l'un parmi :
- une première table de correspondance comprenant une correspondance entre un point de coordonnées (X, Y) d'un élément à réflexion spéculaire disposé à la place de l'échantillon (20) pendant une étape de calibration géométrique, et sa réflexion sur l'écran dispersif (40), pour une pluralité d'incidences ;
- une deuxième table de correspondance, comprenant des coefficients multiplicatifs calculés à l'issue d'une calibration photométrique ; et
- une troisième table de correspondance comprenant une correspondance entre un pixel de coordonnées (U, V) la caméra hyperspectrale (50), et les valeurs (θ_in, ϕ_in, θ_out, ϕ_out ; x et y) correspondantes,
la cellule (100) étant optionnellement équipée en outre d'au moins l'un parmi :
- un laser à balayage, configuré pour, en cas de détection de présence, inhiber au moins l'un parmi la source de lumière (30), le premier bras articulé (110) et le deuxième bras articulé (120) ; et
- un filtre polarisant, solidaire de la source de lumière (30) ou du dispositif de prise de vue multicapteurs, et dont l'axe de polarisation est optionnellement variable.

4. Dispositif selon l'une quelconque des revendications précédentes, dans lequel le dispositif optique est configuré de sorte que la scène observée par le dispositif de prise de vue multicapteurs est :
- soit ledit écran dispersif (40)
- soit l'échantillon (20).

5. Dispositif selon l'une quelconque des revendications précédentes, dans lequel la source de lumière (30) est configurée pour émettre un faisceau lumineux incident (70) présentant une section circulaire de diamètre équivalent compris entre 0,1 mm et 20 mm, optionnellement modifiable, et qui est susceptible de générer jusqu'à 1.000.000 de lux.

6. Dispositif selon l'une quelconque des revendications précédentes, dans lequel la source de lumière (30) comprend :
- Soit un ensemble d'au moins 3 LEDs adjacentes dont une émet en lumière blanche, une en rouge profond et une en violet, pour émettre sur tout le spectre visible ;
- Soit plusieurs LEDs dont les faisceaux respectifs sont mélangés grâce à des lames semi réfléchissantes,
- la source de lumière (30) étant optionnellement configurée comme un système sur puce (SOC).

7. Dispositif selon l'une quelconque des revendications 2 à 6, dans lequel l'écran dispersif (40) comprend un revêtement en fluoropolymère qui possède une haute réflexion lambertienne.

8. Dispositif selon l'une quelconque des revendications précédentes, dans lequel le dispositif de prise de vue multicapteurs est une caméra hyperspectrale (50).

9. Dispositif selon la revendication 8, dans lequel la caméra hyperspectrale (50) comprend un dispositif de séparation des longueurs d'onde qui permet la décomposition spectrale de la lumière incidente ou réfléchie.

10. Dispositif selon la revendication 8 ou 9, dans lequel la caméra hyperspectrale (50) est configurée pour observer l'écran dispersif (40) ou l'échantillon (20) colonne par colonne et déterminer le spectre, la luminance et la radiance en chaque pixel de l'image hyperspectrale.

11. Dispositif selon l'une quelconque des revendications précédentes, comprenant un calculateur configuré pour calculer pour un ensemble de points (x,y) dans un repère lié à l'échantillon (20) au moins l'un parmi :
- une carte géographique des normales à l'échantillon (20) à partir des valeurs (θ_in, (p_in) de la lumière incidente et des valeurs (θ_out, ϕ_out) de la lumière réfléchie; et
- une BRDF globale texturée, qui est la collection des BRDF ponctuelles, chaque pixel d'une texture de l'échantillon (20) étant **caractérisé par** l'une de ces BRDF ponctuelles.

## Patentansprüche

1. Optische Vorrichtung zur Messung der optischen Eigenschaften der Materialien, die mindestens eines von von dem Material einer Probe (20) in alle sphärischen Richtungen des Raums um die Probe (20) herum reflektiertem Licht (BRDF) und übertragenem Licht (BTDF) für jede sphärische Richtung des einfallenden Lichts enthalten, wobei die Vorrichtung enthält:
- eine Lichtquelle (30),
- ein Goniophotometer, das konfiguriert ist, mindestens eines zu messen von:
o den Richtungen des einfallenden Lichts in sphärischen Koordinaten (θ_in, ϕ_in),
o den Richtungen des reflektierten Lichts in sphärischen Koordinaten (θ_out, ϕ_out),
**dadurch gekennzeichnet, dass** sie außerdem enthält:
- eine Multisensor-Bildaufnahmevorrichtung, die konfiguriert ist, das Emissionsspektrum des von der Probe zu einer Einheit von Punkten der von der Multisensor-Bildaufnahmevorrichtung beobachteten Szene reflektierten oder übertragenen Lichts zu bestimmen, die ein Bild erzeugt, das eine Einheit von übereinander liegenden Schichten enthält, von denen jede Schicht einem Sensor entspricht, der konfiguriert ist, nur für eine quasi-monochromatische Wellenlänge empfindlich zu sein;
wobei das Goniophotometer in Form einer Zelle (100) vorliegt, die enthält:
- einen ersten in drei Dimensionen des Raums gelenkigen und zum Tragen der Lichtquelle (30) konfigurierten Arm (110), und
- einen zweiten in drei Dimensionen des Raums gelenkigen und zum Tragen der Probe (20) oder eines Probenträgers (10) konfigurierten Arm (120);
wobei die relativen Ausrichtungen des ersten Gelenkarms (110) und des zweiten Gelenkarms (120) steuerbar sind;
wobei die Vorrichtung optional außerdem die Probe (20) enthält.

2. Vorrichtung nach Anspruch 1, die außerdem einen dispersiven Bildschirm (40) enthält, dessen Position und räumliche Ausrichtung vorzugsweise einstellbar sind.

3. Vorrichtung nach Anspruch 2, die außerdem einen Speicher enthält, der mindestens eine enthält von:
- einer ersten Entsprechungstabelle, die eine Entsprechung zwischen einem Koordinatenpunkt (X, Y) eines Elements mit Spiegelreflexion, das während eines geometrischen Kalibrierungsschritts anstelle der Probe (20) angeordnet wird, und seiner Reflexion auf dem dispersiven Bildschirm (40) für eine Vielzahl von Anstellwinkeln enthält;
- einer zweiten Entsprechungstabelle, die am Ende einer photometrischen Kalibrierung berechnete multiplikative Koeffizienten enthält; und
- einer dritten Entsprechungstabelle, die eine Entsprechung zwischen einem Koordinatenpixel (U, V) der hyperspektralen Kamera (50) und den entsprechenden Werten (θ_in, ϕ_in, θ_out, ϕ_out; x und y) enthält,
wobei die Zelle (100) optional außerdem ausgestattet ist mit mindestens einem von:
- einem Abtastlaser, der konfiguriert ist, im Fall einer Anwesenheitserkennung mindestens eines von der Lichtquelle (30), dem ersten Gelenkarm (110) und dem zweiten Gelenkarm (120) zu blockieren; und
- einem Polarisationsfilter, der fest mit der Lichtquelle (30) oder der Multisensor-Bildaufnahmevorrichtung verbunden ist, und dessen Polarisationsachse optional variabel ist.

4. Vorrichtung nach einem der vorhergehenden Ansprüche, wobei die optische Vorrichtung so konfiguriert ist, dass die von der Multisensor-Bildaufnahmevorrichtung beobachtete Szene ist:
- entweder der dispersive Bildschirm (40)
- oder die Probe (20).

5. Vorrichtung nach einem der vorhergehenden Ansprüche, wobei die Lichtquelle (30) konfiguriert ist, einen einfallenden Lichtstrahl (70) zu emittieren, der einen optional veränderbaren Kreisquerschnitt eines Äquivalenzdurchmessers zwischen 0,1 mm und 20 mm aufweist, und die bis zu 1.000.000 Lux erzeugen kann.

6. Vorrichtung nach einem der vorhergehenden Ansprüche, wobei die Lichtquelle (30) enthält:
- entweder eine Einheit von mindestens 3 benachbarten LEDs, von denen eine ein weißes, eine ein tiefrotes und eine ein violettes Licht emittiert, um im ganzen sichtbaren Spektrum zu emittieren;
- oder mehrere LEDs, deren jeweilige Strahlenbündel dank halbreflektierender Lamellen gemischt sind,
- wobei die Lichtquelle (30) optional wie ein System-on-Chip (SOC) konfiguriert ist.

7. Vorrichtung nach einem der Ansprüche 2 bis 6, wobei der dispersive Bildschirm (40) eine Beschichtung aus Fluorpolymer enthält, das eine hohe lambertianische Reflexion besitzt.

8. Vorrichtung nach einem der vorhergehenden Ansprüche, wobei die Multisensor-Bildaufnahmevorrichtung eine hyperspektrale Kamera (50) ist.

9. Vorrichtung nach Anspruch 8, wobei die hyperspektrale Kamera (50) eine Trennvorrichtung der Wellenlängen enthält, die die Spektralzerlegung des einfallenden oder reflektierten Lichts erlaubt.

10. Vorrichtung nach Anspruch 8 oder 9, wobei die hyperspektrale Kamera (50) konfiguriert ist, den dispersiven Bildschirm (40) oder die Probe (20) Spalte für Spalte zu beobachten und das Spektrum, die Leuchtdichte und die Strahldichte in jedem Pixel des hyperspektralen Bilds zu bestimmen.

11. Vorrichtung nach einem der vorhergehenden Ansprüche, die einen Rechner enthält, der konfiguriert ist, für eine Einheit von Punkten (x,y) in einem mit der Probe (20) verbundenen Bezugssystem mindestens eine zu berechnen von:
- einer geographischen Karte der Normalen zur Probe (20) ausgehend von den Werten (θ_in, ϕ_in) des einfallenden Lichts und den Werten (θ_out, <p_out) des reflektierten Lichts; und
- einer texturierten globalen BRDF, die die Sammlung der punktuellen BRDF ist, wobei jedes Pixel einer Textur der Probe (20) durch eine dieser punktuellen BRDF gekennzeichnet ist.

## Claims

1. Optical device for measuring the optical properties of materials comprising at least one among the light reflected (BRDF) and the light transmitted (BTDF) by the material of a sample (20) in all the spherical directions of the space around said sample (20), the device comprising, for each spherical direction of the incident light:
- a light source (30),
- a goniophotometer configured to measure at least one among:
∘ the directions of the incident light in spherical coordinates (θ_in, cp_in),
∘ the directions of the reflected light in spherical coordinates (θ_out, cp_out),
**characterized in that** it further comprises:
- a multi-sensor imaging device, configured to determine the emission spectrum of the light reflected or transmitted by the sample towards a set of points in the scene observed by the multi-sensor imaging device which generates an image comprising a set of superposed layers each layer of which respectively corresponds to a sensor configured to be sensitive only to a single quasi-monochromatic wavelength,
the goniophotometer taking the form of a cell (100) comprising:
- a first arm (110) hinged so as to be movable in three dimensions of space and configured to bear the light source (30), and
- a second arm (120) hinged so as to be movable in three dimensions of space and configured to bear the sample (20) or a sample holder (10),
the relative orientations of the first hinged arm (110) and of the second hinged arm (120) being controllable,
the device optionally further comprising said sample (20).

2. Device according to Claim 1, further comprising a dispersive screen (40), the spatial orientation and position of which are preferably adjustable.

3. Device according to Claim 2, further comprising a memory containing at least one among:
- a first look-up table containing a correspondence between a point of coordinates (X, Y) on an element generating specular reflection that is positioned in the place of the sample (20) during a geometric calibration step, and its reflection from the dispersive screen (40), for a plurality of angles of incidence,
- a second look-up table, comprising multiplicative coefficients calculated at the end of a photometric calibration, and
- a third look-up table comprising a correspondence between a pixel of coordinates (U, V) of the hyperspectral camera (50), and the corresponding values (**θ_**in, (**ϕ_**in, **θ_**out, **ϕ**_out; x and y),
the cell (100) optionally further being equipped with at least one among:
- a scanning laser, configured to, in case of detection of presence, inhibit at least one among the light source (30), the first hinged arm (110) and the second hinged arm (120), and
- a polarizing filter, securely fastened to the light source (30) or the multi-sensor imaging device, and the polarization axis of which is optionally variable.

4. Device according to any one of the preceding claims, wherein the optical device is configured such that the scene observed by the multi-sensor imaging device is:
- either said dispersive screen (40),
- or the sample (20).

5. Device according to any one of the preceding claims, wherein the light source (30) is configured to emit an incident light beam (70) having an, optionally modifiable, circular cross section of equivalent diameter comprised between 0.1 mm and 20 mm, and which is capable of generating up to 1 000 000 lux.

6. Device according to any one of the preceding claims, wherein the light source (30) comprises:
- either a set of at least 3 adjacent LEDs one of which emits white light, one of which emits in the deep red and one of which emits in the violet, so as to cover the entire visible spectrum,
- or a plurality of LEDs the respective beams of which are mixed by virtue of semi-reflecting plates,
- the light source (30) optionally being configured as a system-on-chip (SOC).

7. Device according to any one of Claims 2 to 6, wherein the dispersive screen (40) comprises a fluoropolymer coating that possesses a high Lambertian reflectance.

8. Device according to any one of the preceding claims, wherein the multi-sensor imaging device is a hyperspectral camera (50).

9. Device according to Claim 8, wherein the hyperspectral camera (50) comprises a wavelength-splitting device that allows the incident or reflected light to be decomposed spectrally.

10. Device according to Claim 8 or 9, wherein the hyperspectral camera (50) is configured to observe the dispersive screen (40) or the sample (20) column by column and to determine the spectrum, luminance and radiance in each pixel of the hyperspectral image.

11. Device according to any one of the preceding claims, comprising a computer configured to compute, for a set of points (x,y) in a reference frame associated with the sample (20), at least one among:
- a spatial map of the normals to the sample (20) from the values (**θ_**in, **ϕ_**in) of the incident light and the values (**θ_**out, **ϕ_**out) of the reflected light; and
- a textured overall BRDF, namely a collection of the point BRDFs, each pixel of a texture of sample (20) being **characterized by** one of these point BRDFs.
